## Europäisches Patentamt
## European Patent Office
## Office européen des brevets

(11) Publication number: **0 066 306**
**B1**

# EUROPEAN PATENT SPECIFICATION

(45) Date of publication of patent specification: **29.05.85**

(21) Application number: **82200482.6**

(22) Date of filing: **22.04.82**

(51) Int. Cl.⁴: **B 01 D 53/34, · C 01 B 17/05, C 10 K 1/08**

(54) Process for the removal of H2S and CO2 from gaseous streams.

(30) Priority: **26.05.81 US 267181**

(43) Date of publication of application:
**08.12.82 Bulletin 82/49**

(45) Publication of the grant of the patent:
**29.05.85 Bulletin 85/22**

(84) Designated Contracting States:
**BE DE FR GB IT NL**

(56) References cited:
**DE-A-1 954 781**
**US-A-4 009 251**
**US-A-4 091 073**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Diaz, Zaida**
**11606 Village Place**
**Houston Texas (US)**

(74) Representative: **Aalbers, Onno et al**
**P.O. Box 302**
**NL-2501 CH The Hague (NL)**

The file contains technical information submitted after the application was filed and not included in this specification

Courier Press, Leamington Spa, England.

# Description

The invention relates to a process for the removal of $H_2S$ and $CO_2$ from a gaseous stream containing $H_2S$ and $CO_2$, in which process

a) the gaseous stream is contacted with a lean $CO_2$-selective absorbent mixture comprising a physical absorbent and an Fe(III) chelate, and

b) a sweet gaseous stream is separated from the spent absorbent mixture containing absorbed $CO_2$, solid sulphur, and the corresponding Fe(II) chelate.

The presence of significant quantities of $H_2S$ and $CO_2$ in various "sour" industrial gaseous streams poses a persistent problem. A gaseous stream is named "sour" if it contains significant quantities of $H_2S$ and/or $CO_2$.

Although various procedures have been developed to remove and recover these contaminants, most such processes are unattractive for a variety of reasons. Accordingly, there remains a need for an efficient and low cost process to remove these undesired materials.

While some work has been done in the area of removal and conversion of $H_2S$ to sulphur by use of iron complexes in waste gas streams, such processes generally are inapplicable directly to purification of hydrocarbon feedstock, coal gasification, or natural gas stream having high ratios of $CO_2$ to $H_2S$. For example, U.S.—A—3,266,320 discloses the removal of $H_2S$ from fluid passing through or leaving industrial processes by adding to the polluted streams certain chelates of polyvalent metals. The chelates are added in an amount which is stoichiometrically substantially less than the amount of the pollutant, and the chelate- and pollutant-containing stream is contacted with oxygen. The preferred chelates are the iron, cobalt, and nickel chelates of acetyl acetone, cyclopentadiene, ethylenediaminetetraacetic acid, N-hydroxyethylethylenediaminetriacetic acid, gluconic acid, tartaric acid and citric acid. The chelate is said to catalyze the reaction.

As indicated, however, this procedure is unsuited to gaseous hydrocarbon feedstock, coal gasification stream, or natural gas treatment since no provision is made for $CO_2$ removal. More importantly, the use of oxygen with the materials contemplated would be intolerable. Finally, the amounts of chelate employed in the patent specification are merely catalytic, and do not give the desired degree of $H_2S$ removal from gaseous streams.

Similarly, U.S.—A—3,622,273 discloses the removal of $H_2S$ from a gaseous stream by contacting the gaseous stream with a solution containing, by weight, from 0.005 to 20 percent of a ferric ion complex, from 25.0 to 99.945 percent of water, and from 0.05 to 10.0 percent of a buffering agent comprising an alkali metal carbonate and/or an alkali metal hydrogen carbonate. According to the patent specification, known complexing agents, such as nitrilotriacetic acid and ethylenediaminetetraacetic acid, present stability problems when employed in $H_2S$ removal. To overcome these problems, the patent specification specifies the addition of a buffer to the treating solution, in the amount and type indicated previously. The ferrous complex resulting from reaction of the ferric complex with the $H_2S$ may be regenerated separately and re-used indefinitely.

A process of the type as described in the beginning of this specification is found in U.S.—A—4,091,073, according to which $H_2S$ and $CO_2$ are simultaneously removed from a variety of gas streams. The gas stream containing the sour gases is contacted with a solution of the Fe(III) chelate of N - (2 - hydroxyethyl)ethylenediaminetriacetic acid in a $CO_2$-selective solvent. The $H_2S$ is converted to sulphur, the $CO_2$ is absorbed to produce a purified gas stream, and the Fe(III) chelate is converted to the Fe(II) chelate. The process includes sulphur removal and simultaneous regeneration of the solvent and the Fe(III) chelate.

It is an object of the present invention to provide an economical and efficient method for the removal of $H_2S$ and $CO_2$ from a gaseous stream.

It is another object to produce high quality sulphur crystals which settle readily.

A third object is to use an absorbent in which the Fe(II) chelate and the Fe(III) chelate have a good solubility.

Accordingly, the invention provides a process for the removal of $H_2S$ and $CO_2$ from a gaseous stream containing $H_2S$ and $CO_2$, as specified at the beginning, characterized in that diethylene glycol monoethyl ether is used as a physical absorbent and the Fe(III) chelate of nitrilotriacetic acid as the Fe(III) chelate.

A purified or "sweet" gaseous stream is produced which meets general industrial and commercial $H_2S$ and $CO_2$ specifications. The $CO_2$ is absorbed and the $H_2S$ is immediately converted to sulphur by the Fe(III) chelate of nitrilotriacetic acid. In the process, the Fe(III) chelate is reduced to the Fe(II) chelate.

As indicated, a critical feature of the invention is the use of diethylene glycol monoethyl ether as the absorbent liquid. This ether is also referred to as "carbitol" or "3,6 - dioxaoctanol". The solvent need not be pure, and, in general, will contain minor amounts of other materials. The use of this absorbent provides a system which can be virtually non-aqueous, has a high $H_2S$ and $CO_2$ capacity, and has a low vapour pressure at typical operating temperatures. Additionally, the solutions exhibit good $CO_2$ selectivities.

The absorbent admixture separated in step b) may be discarded, if desired, but for economical reasons the Fe(III) chelate of nitrilotriacetic acid is suitably regenerated and the sulphur removed from the absorbent mixture. So, the Fe(II) chelate of nitrilotriacetic acid separated in step b) is preferably contacted with an oxygen-containing gas, producing a lean $CO_2$-selective absorbent mixture containing regenerated Fe(III) chelate of nitrilotriacetic acid.

The sulphur is suitably removed from absorbent admixture separated in step b) or from the lean $CO_2$-selective absorbent mixture containing the regenerated Fe(III) chelate. As the sulphur crystals settle readily, they can easily be removed. Sulphur removal from solution may be accomplished by means such as extraction, liquid flotation, filtration, or use of a hydrocyclone, etc.

The lean $CO_2$-selective absorbent mixture containing regenerated Fe(III) chelate of nitrilotriacetic acid may be used in any suitable manner; preferably, the process according to the invention is operated as a cyclic procedure by returning this lean mixture to step a) for use as lean absorbent mixture.

If significant quantities of $CO_2$ have been absorbed, the reactant-containing solution is preferably stripped, such as by heating or pressure reduction, to remove the bulk of the $CO_2$ before regeneration of the reactant (either prior or subsequent to sulphur removal). Alternatively, or if small quantities of $CO_2$ are absorbed, the $CO_2$ may simply be stripped during the regeneration. The regenerated absorbent mixture may then be returned to step a) for further use.

The particular type of gaseous stream treated is not critical, as will be evident. Streams particularly suited to removal of $H_2S$ and $CO_2$ by the process of the invention are, as indicated, naturally occurring gases, synthesis gases, process gases, and fuel gases produced by gasification procedures, e.g., gases produced by the gasification or liquefaction of coal and gasification of petroleum, shale, tar sands, etc. Particularly preferred are coal gasification streams, natural gas streams and refinery feedstocks composed of gaseous hydrocarbon streams, and other gaseous hydrocarbon streams. The term "hydrocarbon stream(s)", as employed herein, is intended to include streams containing significant quantities of hydrocarbons (both paraffinic and aromatic), it being recognized that such streams may contain significant "impurities" not technically defined as a hydrocarbon. Streams containing principally a single hydrocarbon, e.g., ethane, are eminently suited to the process of the invention. Streams derived from the gasification and/or partial oxidation of gaseous or liquid hydrocarbons may be treated by the process according to the invention. The $H_2S$ content of the type of streams contemplated will vary extensively, but, in general, will range from about 0.1 percent to about 10 percent by volume. $CO_2$ content may also vary, and may range from about 0.5 percent to over 99 percent by volume. Obviously, the contents of $H_2S$ and $CO_2$ present are not generally a limiting factor in the process of the invention.

The temperatures employed in the contacting of step a) are not generally critical, except in the sense that the temperatures employed must permit acceptable absorption of $CO_2$. In general, temperatures from 10°C to 80°C are suitable, and temperatures from 20°C to 45°C are preferred. In many commercial applications, such as the removal of $H_2S$ and $CO_2$ from natural gas to meet pipeline specifications, contacting at ambient temperatures is preferred, since the cost of refrigeration would exceed the benefits obtained due to increased absorption at the lower temperature. Contact times may be in the range from about 1 s to about 270 s or longer, with contact times in the range of from 2 s to 120 s being preferred.

Similarly, in the regeneration of the Fe(III) chelate or stripping, temperatures may be varied widely. Preferably, the regeneration should be carried out at substantially the same temperature as the absorption in step a). If heat is added to assist regeneration, cooling of the absorbent mixture is required before return of the absorbent mixture to step a). In general, temperatures in the range of from about 10°C to 80°C, preferably from 20°C to 40°C, may be employed.

The pressure in step a) may vary widely, depending on the pressure of the gaseous stream to be treated. For example, pressures in step a) may vary from 1 bar up to 152 or even 203 bar. Pressures in the range of from 1 bar to about 101 bar are preferred. In the regeneration of the Fe(III) chelate or desorption of $CO_2$ pressures will range from about 1 bar to about 3 or 4 bar. The pressure-temperature relationships involved are well understood by those skilled in the art, and need not be detailed herein. Other conditions of operation for this type of reaction process, e.g., pH, etc., are further described in U.S.—A—3,068,065 and U.S.—A—4,009,251. Preferably, pH in the process of the invention will range from about 6 to about 7.5. The process is preferably conducted continuously, and the molar ratio of the nitrilotriacetic acid to the iron is from about 1.2 to 1.4.

As indicated, the $H_2S$, when contacted, is quickly converted by the Fe(III) chelate of nitrilotriacetic acid to elemental sulphur. Since the Fe(III) chelate (and the Fe(II) chelate) has limited solubility in many solvents or absorbents, it is a real advantage of the invention that the chelate has good solubility in the absorbent used in the process according to the invention, i.e., in diethylene glycol monoethyl ether (Carbitol). The chelate is preferably supplied in admixture with the liquid absorbent and water. The amount of chelate supplied is that amount sufficient to convert all or substantially all of the $H_2S$ in the gaseous stream, and will generally be in the order of at least about 2 mol per mol of $H_2S$. Ratios of from about 2 mol to about 15 mol of chelate per mol of $H_2S$ may be used, with ratios of from about 2 mol per mol to about 5 mol of chelate per mol of $H_2S$ being preferred. The manner of preparing the admixture is a matter of choice. Preferably, the chelate is added as an aqueous solution to the liquid absorbent. Since the chelate has significant solubility in the absorbent, and since water is produced by the reaction of the $H_2S$ and the chelate, precise amounts of water to be added cannot be given. In general, the amount of chelate solution supplied may be about 20 percent to about 80 percent by volume of the total absorbent admixture supplied to the absorption zone. The Fe(III) chelate solution will generally be supplied as an aqueous solution having a concentration of from about 0.1 molar to about 1.5 molar. A composition of about 1 molar is preferred.

The loaded absorbent mixture is regenerated by contacting the mixture with an oxygen-containing gas. Examples of oxygen-containing gases are air, air enriched with oxygen and pure oxygen. The oxygen accomplishes two functions, the stripping of any residual $CO_2$ from the loaded absorbent mixture and the oxidation of the Fe(II) chelate of nitrilotriacetic acid to the Fe(III) chelate of nitrilotriacetic acid. The oxygen (in whatever form supplied) is supplied in a stoichiometric equivalent or excess with respect to the amount of Fe(II) chelate present in the mixture. Preferably, the oxygen gas is supplied in an amount in the range of from about 1.2 to 3 times excess.

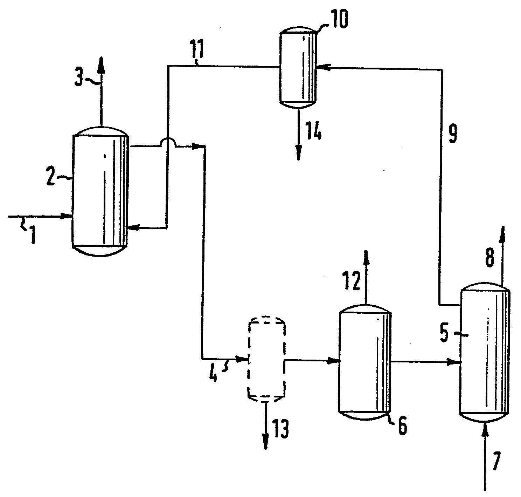

The invention is further illustrated by means of the following Example. This example is described with reference to the accompanying drawing.

Example

As shown, sour gas, e.g. natural gas containing about 0.5 percent $H_2S$, and 32 percent by volume $CO_2$ in a line 1 enters an absorption column 2 (tray type) into which also enters (via a line 11) an absorbent mixture composed of 90 percent diethylene glycol monoethyl ether (by volume) and 10 percent of an aqueous 0.8 M solution of the Fe(III) chelate of nitrilotriacetic acid. The pressure of the feed gas is about 84 bar and the temperature of the absorbent mixture is about 45°C. A contact time of about 45 s is employed in order to absorb virtually all $CO_2$ and react all the $H_2S$. Purified or "sweet" gas leaves the absorption column 2 through a line 3. The "sweet" gas is of a purity sufficient to meet standard requirements. In the absorbent mixture, the $H_2S$ is converted to elemental sulphur by the Fe(III) chelate, the Fe(III) chelate in the process being converted to the Fe(II) chelate. The absorbent mixture, containing the elemental sulphur, absorbed $CO_2$ and the Fe(II) chelate, is removed continuously and sent through a line 4 to a regenerator 5, which is a column. Prior to entry to the regenerator 5, the sulphur in the absorbent mixture may be removed in a sulphur separation zone (shown in dotted lines). Sulphur is removed from this zone via a line 13. However, sulphur recovery may also be accomplished at a later stage, as shown hereinafter. As shown, the bulk of the $CO_2$ absorbed is removed in a unit 6 by reduction of pressure. The $CO_2$ liberated in the unit 6 is withdrawn via a line 12. Heat may be added to unit 6, if necessary. Any absorbent carried over with the vented $CO_2$ may be recovered by conventional equipment, such as a carbon absorption bed (not shown), and recycled.

In the regenerator 5 the loaded absorbent mixture is contacted with excess air supplied via a line 7 to strip the remaining $CO_2$ from the mixture and convert the Fe(II) chelate to the Fe(III) chelate.

The temperature of the stripping column is about 45°C, and pressure in the column is maintained at about 2 bar. Spent air is removed from the regenerator 5 through a line 8, while regenerated absorbent mixture, which still contains elemental sulphur, is sent through a line 9 to a sulphur removal unit 10. In unit 10, which may be a settler, the sulphur is removed from the absorbent mixture and recovered via a line 14. The now fully regenerated absorbent mixture is returned via a line 11 to the absorption column 2.

An absorption column might comprise two separate columns in which the solution from the lower portion of the first column would be introduced into the upper portion of the second column, the gaseous material from the upper portion of the first column being fed into the lower portion of the second column. Parallel operation of units is, of course, well within the scope of the invention.

The solutions or mixtures employed may contain other materials or additives for given purposes. For example, U.S.—A—3,933,993 discloses the use of buffering agents, such as phosphate and carbonate buffers. Similarly, U.S.—A—4,009,251 describes various additives, such as sodium oxalate, sodium formate, sodium thiosulphate, and sodium acetate, which may be beneficial.

**Claims**

1. A process for the removal of $H_2S$ and $CO_2$ from a gaseous stream containing $H_2S$ and $CO_2$, in which process

a) the gaseous stream is contacted with a lean $CO_2$-selective absorbent mixture comprising a physical absorbent and an Fe(III) chelate, and

b) a sweet gaseous stream is separated from the spent absorbent mixture containing absorbed $CO_2$, solid sulphur, and the corresponding Fe(II) chelate, characterized in that diethylene glycol monoethyl ether is used as a physical absorbent and the Fe(III) chelate of nitrilotriacetic acid as the Fe(III) chelate.

2. A process as claimed in claim 1, characterized in that the Fe(II) chelate of nitrilotriacetic acid separated in step b) is contacted with an oxygen-containing gas, producing a lean $CO_2$-selective absorbent mixture containing regenerated Fe(III) chelate of nitrilotriacetic acid.

3. A process as claimed in claim 1 or 2, characterized in that sulphur is removed from absorbent admixture separated in step b) or from the lean $CO_2$-selective absorbent mixture containing the regenerated Fe(III) chelate, respectively.

4. A process as claimed in claim 3, characterized in that lean $CO_2$-selective absorbent mixture containing the regenerated Fe(III) chelate is returned to step a) for use as lean absorbent mixture.

5. A process as claimed in claim 3 or 4, characterized in that prior to the regeneration of the Fe(III) chelate and before or after the removal

of sulphur, CO$_2$ is stripped from absorbent mixture containing absorbed CO$_2$ and Fe(II) chelate of nitrilotriacetic acid.

6. A process as claimed in any one of claims 2 to 5, characterized in that heat is supplied to assist in the said regeneration.

7. A process as claimed in any one of the preceding claims, characterized in that the gaseous stream containing H$_2$S and CO$_2$ is a hydrocarbon stream or a stream derived from the gasification of coal.

**Revendications**

1. Un procédé pour l'élimination de H$_2$S et de CO$_2$ d'un courant gaseux contenant H$_2$S et SO$_2$, selon lequel

a) le courant gaseux est mis en contact avec un mélange absorbant sélectif pour CO$_2$ pauvre comprenant un absorbant physique et un chélate de Fe(III) et

b) un courant gaseux non corrosif est séparé du mélange absorbant usé contenant CO$_2$ absorbé, du soufre solide et le chélate de Fe(II) correspondant, caractérisé en ce que l'éther monoéthylique du diéthylèneglycol est utilisé comme absorbant physique et le chélate de Fe(III) de l'acide nitrilotriacétique comme chélate de Fe(III).

2. Un procédé selon la revendication 1, caractérisé en ce que le chélate de Fe(II) de l'acide nitrilotriacétique séparé dans l'étape b) est mis en contact avec un gaz contenant de l'oxygène, produisant un mélange absorbant sélectif pour CO$_2$ pauvre contenant du chélate de Fe(III) d'acide nitrilotriacétique régénéré.

3. Un procédé selon la revendication 1 ou 2, caractérisé en ce qu'on élimine le soufre du mélange absorbant séparé dans l'étape b) ou du mélange absorbant sélectif pour CO$_2$ pauvre contenant le chélate de Fe(III) régénéré, respectivement.

4. Un procédé selon la revendication 3, caractérisé en ce que le mélange absorbant sélectif pour CO$_2$ pauvre contenant le chélate de Fe(III) régénéré est retourné à l'étape a) pour utilisation comme mélange absorbant.

5. Un procédé selon la revendication 3 ou 4, caractérisé en ce qu'avant la régénération du chélate de Fe(III) et avant ou après l'élimination du soufre, CO$_2$ est éliminé par strippage du mélange absorbant contenant CO$_2$ absorbé et le chélate de Fe(II) de l'acide nitrilotriacétique.

6. Un procédé selon l'une quelconque des revendications 2 à 5, caractérisé en ce qu'on fournit de la chaleur pour faciliter la régénération.

7. Un procédé selon l'une quelconque des revendications précédentes, caractérisé en ce que le courant gaseux contenant H$_2$S et CO$_2$ est un courant d'hydrocarbures ou un courant dérivé de la gazéification de la houille.

**Patentansprüche**

1. Verfahren zur Entfernung von H$_2$S und CO$_2$ aus einem gasförmigen Strom, enthaltend H$_2$S und CO$_2$, wobei

a) der gasförmige Strom ausammengebracht wird mit einem zur CO$_2$-Abreicherung selektiven Absorptionsgemisch, umfassend ein physikalisches Absorptionsmittel und ein Fe(III)-chelat und

b) ein gesüßter gasförmiger Strom von dem verbrauchten Absorptionsmittelgemisch, enthaltend absorbiertes CO$_2$, flüssigen Schwefel und das entsprechende Fe(III)-chelat, abgetrennt wird, dadurch gekennzeichnet, daß Diethylenglykol-monoethyl-ether als physikalisches Absorptionsmittel und das Fe(III)-chelat von Nitrilotriessigsäure als Fe(III)-chelat verwendet werden.

2. Verfahren nach Anspruch 1, dadurch gekennzeichnet, daß das Eisen-II-chelat von Nitrilotriessigsäure, das in Stufe b) abgetrennt wird, mit einem sauerstoffhaltigen Gas zusammengebracht wird, unter Bildung eines zur CO$_2$ Abreicherung selektives Absorptionsgemisch, enthaltend regeneriertes Fe(III)-chelat von Nitrilotriessigsäure, zu erhalten.

3. Verfahren nach Anspruch 1 oder 2, dadurch gekennzeichnet, daß Schwefel von dem in Stufe b) abgetrennten Absorptionsgemisch bzw. von dem zur CO$_2$ Abreicherung selektiven Absorptionsgemisch, enthaltend das regenerierte Fe(III)-chelat, entfernt wird.

4. Verfahren nach Anspruch 3, dadurch gekennzeichnet, daß das zur CO$_2$ Abreicherung selektive Absorptionsgemisch, enthaltend das regenerierte Fe(III)-chelat wieder in Stufe a) zurückgeführt wird, um als Absorptionsgemisch zur Abreicherung zu dienen.

5. Verfahren nach Anspruch 3 oder 4, dadurch gekennzeichnet, daß vor der Regenerierung des Fe(III)-chelats und vor oder nach der Entfernung von Schwefel, CO$_2$ von dem absorbiertes CO$_2$ und Fe(II)-chelat von Nitrilotriessigsäure enthaltenden Absorptionsgemisch abgestreift wird.

6. Verfahren nach einem der Ansprüche 2 bis 5, dadurch gekennzeichnet, daß Wärme zugeführt wird, um die Regenerierung zu unterstützen.

7. Verfahren nach einem der vorangehenden Ansprüche, dadurch gekennzeichnet, daß der gasförmige Strom, enthaltend H$_2$S und CO$_2$ ein Kohlenwasserstoffstrom oder ein von der Kohlevergasung abgeleiteter Strom ist.